# EUROPÄISCHE PATENTSCHRIFT

(11) **EP 3 172 096 B1**
(45) Veröffentlichungstag und Bekanntmachung des Hinweises auf die Patenterteilung: **11.03.2020**
(21) Anmeldenummer: 15738302.7
(22) Anmeldetag: 10.07.2015
(51) Int. Cl.: B60S 1/34, B60S 1/38

(54) **SICHERHEITSKUPPLUNG FÜR FINRAY-WISCHER**
SAFETY COUPLING FOR FIN RAY WIPER
ACCOUPLEMENT DE SÉCURITÉ POUR ESSUIE-GLACE À STRUCTURE EN RAYON DE NAGEOIRE

(30) Priorität: 24.07.2014 DE 102014214560
(43) Veröffentlichungstag der Anmeldung: 31.05.2017
(73) Patentinhaber: Robert Bosch GmbH, 70442 Stuttgart (DE)
(72) Erfinder: HACKL, Viktor, H-9400 Sopron (HU); DEAK, Peter, H-1188 Budapest (HU); WEILER, Michael, 77815 Buehl (DE)
(86) Internationale Anmeldenummer: PCT/EP2015/065784
(87) Internationale Veröffentlichungsnummer: WO 2016/012262

(56) Entgegenhaltungen:
- WO-A1-2015/074876
- DE-A1-102013 214 064
- FR-A1- 2 931 762
- GB-A- 433 731
- US-A- 6 026 536

## Beschreibung

### Sicherheitskupplung für Finray-Wischer

Die Erfindung betrifft eine Scheibenwischvorrichtung für ein Fahrzeug, insbesondere ein Kraftfahrzeug.

### Stand der Technik

Scheibenwischvorrichtungen haben typischerweise einen Wischarm oder Wischhebel, wobei ein Wischblatt auf der Scheibe eines Kraftfahrzeugs bewegt wird. Dabei wird das Wischblatt zwischen einer ersten Wendelage und einer zweiten Wendelage bewegt. Zu diesem Zweck ist der Wischarm über die Antriebswelle mit einem Wischermotor verbunden. Insbesondere auf Windschutzscheiben mit starken Krümmungsänderungen und bei großen Temperaturschwankungen verliert das Wischblatt leicht den Kontakt zur Scheibe. Hierdurch kann es, insbesondere bei stark gekrümmten Scheiben, zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es ein Bedürfnis, Scheibenwischvorrichtungen weiter zu verbessern.

Bei der Verbesserung gibt es eine Mehrzahl von Randbedingungen, die zusätzlich berücksichtigt werden sollten. Dabei ist es auch ein Bedürfnis, die Sicherheit der Handhabung und die Benutzerfreundlichkeit zu gewährleisten bzw. zu verbessern. Aus der US 6,026,536 ist eine Kupplungsvorrichtung bekannt, bei der ein Befestigungsteil eines Wischerarms an einem Befestigungselement derart befestigt ist, dass die Kupplungsvorrichtung bis zu einem Überschreiten eines definierten Drehmomentwerts Befestigungsteil und Befestigungselement rotationssteif verbindet. DE-A-102013214064 offenbart den Oberbegriff des Anspruchs 1.

### Offenbarung der Erfindung

Es ist die Aufgabe der vorliegenden Erfindung, ein zuverlässiges, weitgehend schlierenfreies Wischen einer Scheibe eines Fahrzeugs zur Verfügung zu stellen und/oder eine zuverlässige Scheibenwischvorrichtung mit einfacher Handhabung, insbesondere einfacher Montage bzw. Demontage, zur Verfügung zu stellen, die eine Beschädigung der Scheibenwischvorrichtung auch bei höheren Lasten verhindert.

Diese Aufgabe wird gelöst durch eine Scheibenwischvorrichtung mit den Merkmalen gemäß Anspruch 1.

Gemäß einer Ausführungsform wird eine Scheibenwischvorrichtung für ein Fahrzeug mit einem an einer Antriebswelle befestigten Befestigungselement, insbesondere ein Kraftfahrzeug, zur Verfügung gestellt. Die Scheibenwischvorrichtung beinhaltet ein Wischblatt mit einem langgestreckten Oberteil, das zumindest teilweise biegbar ausgestaltet ist, einem langgestreckten Unterteil, das zumindest teilweise biegbar ausgestaltet ist, und mehreren Verbindungselementen zum Verbinden des Oberteils und des Unterteils, wobei die Verbindungselemente entlang einer Längserstreckung des Wischblatts voneinander beabstandet sind, und wobei die Verbindungselemente ausgelegt sind, um eine Bewegung des Oberteils und des Unterteils relativ zueinander mit einer Bewegungskomponente entlang einer Längserstreckung des Wischblatts zu ermöglichen. Die Scheibenwischvorrichtung beinhaltet weiterhin ein wischblattseitiges Befestigungsteil, wobei das wischblattseitige Befestigungsteil an dem Befestigungselement lösbar verbindbar ist, und eine Kupplungsvorrichtung, wobei das wischblattseitige Befestigungsteil und das Befestigungselement durch die Kupplungsvorrichtung bis zu einem Überschreiten eines definierten Drehmomentwerts rotationssteif verbindbar sind.

Bevorzugte Ausführungsformen und besondere Aspekte der Erfindung ergeben sich aus den abhängigen Ansprüchen, den Zeichnungen und der vorliegenden Beschreibung.

### Vorteile der Erfindung

Gemäß den hier beschriebenen Ausführungsformen der Erfindung können Scheibenwischvorrichtungen für Fahrzeuge mit einer Überlastsicherheitsvorrichtung auf besonders günstige Weise und für eine Mehrzahl unterschiedlicher Einsatzgebiete einfach bereitgestellt und montiert werden. Weiterhin ermöglichen die Ausführungsformen der Erfindung ein zuverlässiges, weitgehend schlierenfreies Wischen einer Scheibe eines Fahrzeugs.

Gemäß einer Ausführungsform wird eine Scheibenwischvorrichtung für ein Fahrzeug mit einem an einer Antriebswelle befestigten Befestigungselement, insbesondere ein Kraftfahrzeug, zur Verfügung gestellt. Die Scheibenwischvorrichtung beinhaltet ein Wischblatt mit einem langgestreckten Oberteil, das zumindest teilweise biegbar ausgestaltet ist, einem langgestreckten Unterteil, das zumindest teilweise biegbar ausgestaltet ist, und mehreren Verbindungselementen zum Verbinden des Oberteils und des Unterteils, wobei die Verbindungselemente entlang einer Längserstreckung des Wischblatts voneinander beabstandet sind, und wobei die Verbindungselemente ausgelegt sind, um eine Bewegung des Oberteils und des Unterteils relativ zueinander mit einer Bewegungskomponente entlang einer Längserstreckung des Wischblatts zu ermöglichen. Die Scheibenwischvorrichtung beinhaltet weiterhin ein wischblattseitiges Befestigungsteil, wobei das wischblattseitige Befestigungsteil an dem Befestigungselement lösbar verbindbar ist, und eine Kupplungsvorrichtung, wobei das wischblattseitige Befestigungsteil und das Befestigungselement bis zu einem Überschreiten eines definierten Drehmomentwerts durch die Kupplungsvorrichtung rotationssteif verbindbar sind. Hierdurch kann ein Befestigungskonzept für eine Scheibenwischvorrichtung zur Verfügung gestellt werden, das die Antriebswelle während des Normalbetriebes rotationsfest mit dem Wischarm verbindet und gleichzeitig eine Beschädigung des Wischarms bei übermäßigen Belastungen des Wischarms verhindert.

Gemäß einer weiteren bevorzugten Ausführungsform ist bei Überschreiten des definierten Drehmomentwertes das wischblattseitige Befestigungsteil von dem Befestigungselement lösbar, wobei insbesondere bei Überschreiten des definierten Drehmomentwertes das wischblattseitige Befestigungsteil von dem Befestigungselement freigegeben wird. Dadurch wird eine zuverlässige Trennung der betroffenen Komponenten erreicht und eine Beschädigung der Komponenten durch hohe Drehzahlbelastungen verhindert.

Gemäß der Erfindung beinhaltet die Scheibenwischvorrichtung weiterhin das Befestigungselement, wobei die Kupplungsvorrichtung insbesondere ein Kupplungselement umfasst, das am Befestigungselement angebracht ist und sich bei Erreichen des definierten Drehmomentwertes bewegt. Durch die Bereitstellung eines beweglichen Kupplungselements am Befestigungselement kann der Wischarm und das Befestigungsteil des Wischarms sehr einfach und kostengünstig konstruiert und produziert werden. In einem Beispiel kann das Befestigungsteil des Wischarms zur Befestigung am Befestigungselement außerdem eine Kavität aufweisen, die Kontaktflächen für das Befestigungselement vorsieht. Damit kann der Wischarm einfach und kostengünstig montiert werden, während die Funktion des beweglichen Kupplungselements im Befestigungselement bleibt.

Gemäß einer weiteren bevorzugten Ausführungsform stellt die Kupplungsvorrichtung bei Drehmomentwerten unter dem definierten Drehmomentwert einen Kraft-und/oder Formschluss zwischen dem Befestigungselement und dem Befestigungsteil des Wischarms her. Dadurch kann eine rotationssteife Verbindung zwischen dem Befestigungselement und dem Befestigungsteil bereitgestellt werden, und insbesondere die Rotation der Antriebswelle, an der das Befestigungselement befestigbar ist, auf das Wischblatt übertragen werden.

Gemäß einer weiteren bevorzugten Ausführungsform weist die Kupplungsvorrichtung ein Kupplungselement mit einem Radius und ein an dem Kupplungselement bei Drehmomenten unter dem definierten Drehmoment zumindest teilweise anliegendes Führungselement auf, wobei insbesondere das Kupplungselement am Befestigungselement angebracht ist und das Führungselement an dem Befestigungsteil des Wischarms angebracht ist. Dies stellt eine einfache und zuverlässige Realisierung der Drehmomentbegrenzung unter Berücksichtigung von baulichen Gegebenheiten und vorteilhaften Ausführungsformen des Befestigungsteils und des Befestigungselements dar.

Gemäß einer weiteren bevorzugten Ausführungsform kann durch das an dem Kupplungselement anliegende Führungselement eine rotationssteife Verbindung zwischen dem Befestigungselement und dem Befestigungsteil hergestellt werden. Dabei ist es vorteilhaft, dass sowohl die stabile Abstützung des Befestigungsteils des Wischblattes am Befestigungselement als auch die Kupplungsfunktion von dem Kupplungselement und dem Führungselement zur Verfügung gestellt werden können.

Gemäß einer weiteren bevorzugten Ausführungsform umfasst die Kupplungsvorrichtung weiterhin ein Krafterzeugungselement, insbesondere eine Feder, das an dem Kupplungselement angebracht ist. Durch ein Krafterzeugungselement an dem Kupplungselement kann das Kupplungselement bis zu einer bestimmten Kraft oder einem bestimmten Moment, das auf das Krafterzeugungselement wirkt, in einer stabilen Position gehalten werden.

Gemäß einer weiteren bevorzugten Ausführungsform sind das Kupplungselement und das Führungselement ausgelegt, dass das Kupplungselement mit Radius bei Erreichen des definierten Drehmoments durch das Führungselement rutscht und dabei insbesondere die rotationssteife Verbindung zwischen Befestigungselement und Befestigungsteil löst. Das Durchrutschen des Kupplungselements kann insbesondere durch die gegenseitige Auslegung des Kupplungselementradius und des Führungselements hervorgerufen werden. Dabei kann zum Beispiel ein entsprechend ausgelegtes Krafterzeugungselement die Drehmomentgrenze mitbestimmen, bei der das Kupplungselement durch das Führungselement rutscht. Dies stellt eine einfach zu realisierende und zuverlässige Art dar, das Sicherheitskonzept der hierin beschriebenen Ausführungsformen umzusetzen.

Gemäß einer weiteren bevorzugten Ausführungsform umfasst die Kupplungsvorrichtung eine Rutschkupplung. Durch die Verwendung einer Rutschkupplung werden weitere sicherheitsrelevante Aspekte miteinbezogen, insbesondere wird nach

Überschreiten des Drehmomentgrenzwertes der Wischarm nicht von dem Befestigungselement gelöst, sondern lediglich die Kraftübertragung zwischen Antriebswelle und Wischarm unterbrochen.

Gemäß einer weiteren bevorzugten Ausführungsform ist das wischblattseitige Befestigungsteil einteilig ausgebildet, wobei das wischblattseitige Befestigungsteil insbesondere angepasst ist, um mittels eines Spritzgussverfahrens, insbesondere eines Spritzgussverfahrens mit einem Schritt zur Verfügung gestellt zu werden. Diese Ausführungsformen ermöglichen eine einfache und kostengünstige Herstellung des Befestigungsteils des Wischblattes.

Gemäß einer weiteren bevorzugten Ausführungsform weist das wischblattseitige Befestigungsteil eine Kavität auf, wobei sich in dieser Kavität ein Führungselement der Kupplungsvorrichtung befindet, und wobei das wischblattseitige Befestigungsteil insbesondere weiterhin einen Kontaktpunkt aufweist. Dies stellt eine zuverlässige rotationssteife Befestigung des Befestigungsteils und des Befestigungselements dar.

Gemäß einer weiteren bevorzugten Ausführungsform kann das wischblattseitige Befestigungsteil metall-frei und/oder ohne bewegliche Elemente ausgebildet sein. Dies kann ebenfalls einer einfachen Ausgestaltung dienen. Zum Beispiel kann ein Wischblatt als Ersatzteil kostengünstig hergestellt werden.

Gemäß einer weiteren bevorzugten Ausführungsform kann das wischblattseitige Befestigungsteil ausgebildet sein, um eine Rotation relativ zum Befestigungselement um eine Achse senkrecht zur Längserstreckung des Wischblatts und senkrecht zur Antriebsachse relativ zum Befestigungselement bei einem Drehmoment kleiner als das definierte Drehmoment zu ermöglichen. Hierdurch kann ein definierter Anpressdruck einer Wischlippe an eine Scheibe zur Verfügung gestellt werden. Zum Beispiel kann gemäß weiteren Ausführungsformen die Rotation des Befestigungsteils relativ zum Befestigungselement in einem Winkelbereich von 30° oder kleiner beschränkt ist. Es handelt sich folglich nicht um eine Rotation, die einem abklappen des Wischblatts von der Scheibe entspricht.

Gemäß einer weiteren bevorzugten Ausführungsform können die mehreren Verbindungselemente an mehreren oberen Verbindungspositionen mit dem Oberteil und an mehreren unteren korrespondierenden Verbindungspositionen mit dem Unterteil verbunden sein, wobei bei der Bewegung des Oberteils und des Unterteils relativ zueinander der Abstand zwischen einer oberen Verbindungspositionen und einer korrespondierenden unteren Verbindungsposition, im Wesentlichen konstant ist, insbesondere konstant ist mit einer Abweichung von ±1 mm. Hierdurch kann eine Kraftübertragung zwischen dem Oberteil und dem Unterteil zur Verfügung gestellt werden, die eine Scheibenwischvorrichtung ermöglicht, die gemäß dem Finray-Prinzip arbeitet.

Gemäß einer weiteren nicht beanspruchten Ausführungsform wird ein Verfahren zum Begrenzen eines Drehmoments, das auf einem Wischarm einer Scheibenwischvorrichtung wirkt, bereitgestellt. Das Verfahren beinhaltet das Bereitstellen eines Befestigungselements, das an einer Antriebswelle eines Fahrzeugs befestigbar ist; und das Bereitstellen eines Wischblattes mit Befestigungsteil, das mit dem Befestigungselement lösbar verbindbar ist. Das Verfahren umfasst weiterhin das Zusammenfügen des Befestigungsteils des Wischarms mit dem Befestigungselement mittels einer Kupplungsvorrichtung, insbesondere einer Kupplungsvorrichtung mit einem Kupplungselement und einem Führungselement, wobei durch das Zusammenfügen eine bis zu einem definierten Drehmoment des Wischblatts rotationssteife Verbindung zwischen dem Befestigungselement und dem Befestigungsteil des Wischarms hergestellt wird. Es kann somit ein Sicherheitskonzept für eine Scheibenwischvorrichtung bereitgestellt werden, das eine Beschädigung des Wischblattes bei hoher Drehmomentbelastung verhindert. In einem Beispiel kann das Verfahren weiterhin das Drücken des Kupplungselements gegen das Führungselement durch ein Krafterzeugungselement, insbesondere eine Feder umfassen. Dadurch wird ein sicherer Sitz während des Normalbetriebes, d.h. ohne Einfluss eines hohen Drehmoments auf den Wischarm gewährleistet.

### Kurze Beschreibung der Zeichnungen

Ausführungsbeispiele der Erfindung sind in den Figuren dargestellt und werden im Folgenden näher beschrieben. Es zeigen:
Figur 1 eine schematische Darstellung eines Teils eines Wischblatts in einer Längsschnittansicht,
Figur 2 eine schematische Darstellung eines Teils eines Wischblatts in einer Längsschnittansicht gemäß Ausführungsform der Erfindung, wobei ein wischblattseitiges Befestigungsteil an einem Befestigungselement befestigt ist,
Figur 3 eine schematische Querschnittansicht von oben einer Scheibenwischvorrichtung mit einer Kupplungsvorrichtung gemäß einer Ausführungsform der Erfindung,
Figur 4A eine schematische Darstellung eines Eingriffs eines Teils eines Kupplungselements mit einem Führungselement eines wischblattseitigen Befestigungsteils gemäß einer Ausführungsform der Erfindung,
Figur 4B eine schematische Darstellung eines Ausschnitts eines Kupplungselements und eines Führungselements gemäß einer Ausführungsform der Erfindung,
Figur 4C eine schematische Darstellung des wischblattseitigen Befestigungsteils gemäß einer Ausführungsform der Erfindung,
Figuren 5A bis 5D eine schematische Darstellung der Funktionsweise einer Kupplungsvorrichtung einer Scheibenwischvorrichtung gemäß einer Ausführungsform der Erfindung,
Figur 6 eine schematische Darstellung eines Befestigungsteils und eines Befestigungselements einer Scheibenwischvorrichtung gemäß einer Ausführungsform der Erfindung,
Figur 7 eine schematische Darstellung eines Befestigungsteils und eines Befestigungselements einer Scheibenwischvorrichtung gemäß einer Ausführungsform der Erfindung,
Figur 8A eine schematische Darstellung eines weiteren Ausführungsbeispiels einer erfindungsgemäßen Scheibenwischvorrichtung in Form eines Wischerarms mit integriertem Wischblatt in einer Grundstellung,
Figur 8B eine schematische Darstellung des Wischerarms mit integriertem Wischblatt nach Fig. 8A in einer an eine Scheibe angelegten Stellung,
Figur 9 eine schematische Darstellung eines Wischblatts gemäß Ausführungsformen vorliegenden Erfindung in einer Grundstellung,
Figur 10 eine schematische Darstellung eines Wischblatts gemäß Ausführungsformen der vorliegenden Erfindung in einer an eine Scheibe angelegten Stellung, und
Figur 11 ein Diagramm zur Illustration eines Verfahrens zum Begrenzen eines Drehmoments, das auf einem Wischarm einer Scheibenwischvorrichtung wirkt gemäß Ausführungsformen der vorliegenden Erfindung.

### Ausführungsformen der Erfindung

Im Folgenden werden, sofern nicht anders vermerkt, für gleiche und gleichwirkende Elemente gleiche Bezugszeichen verwendet.

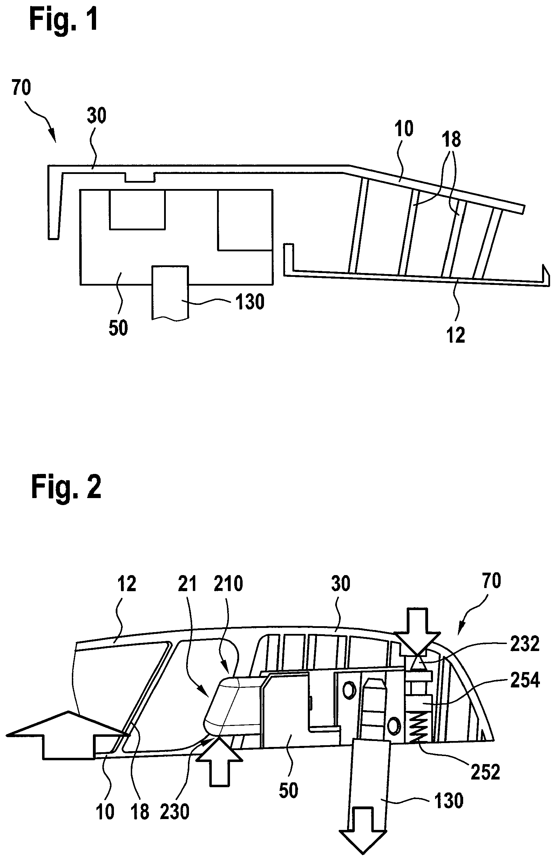

Figur 1 zeigt eine schematische Darstellung eines Ausschnitts eines Wischblatts 2, das Teil einer Scheibenwischvorrichtung für ein Fahrzeug, insbesondere für ein Kraftfahrzeug, gemäß Ausführungsformen der Erfindung sein kann. Figur 1 zeigt die Scheibenwischvorrichtung dabei in einer an eine Scheibe 4 angelegten Stellung. Das Wischblatt 2 umfasst ein langgestrecktes Oberteil 10 und einem langgestrecktes Unterteil 12, welche zumindest teilweise biegbar ausgestaltet sind. Des Weiteren sind mehrere Verbindungselemente 18 zum Verbinden des Oberteils 10 und des Unterteils 12 vorgesehen, wobei die Verbindungselemente 18 entlang einer Längserstreckung 8 des Wischblatts 2 voneinander beabstandet sind. Die Verbindungselemente 18 sind ausgelegt, um eine Bewegung des Oberteils 10 und des Unterteils 12 relativ zu einander mit einer Bewegungskomponente entlang einer Längserstreckung des Wischblatts 2 zu ermöglichen. Hierbei sind die Verbindungselemente an dem Oberteil 10 an einer jeweiligen oberen Verbindungsposition verbunden und an dem Unterteil 12 an einer jeweiligen unteren Verbindungsposition.

Zum Beispiel ist an den Verbindungspositionen jeweils ein Drehgelenk zur Verfügung gestellt. Bei einer Bewegung des Oberteils 10 des Unterteil 12 relativ zueinander verändert sich der Abstand einer oberen Verbindungsposition zu einer unteren Verbindungsposition am selben Verbindungselement im Wesentlichen nicht, d.h. der Abstand ist mit Abweichungen von zum Beispiel ±1 mm, insbesondere ±0,3 mm konstant.

Weiter hat das Wischblatt 2 ein Kopfende 70. Am Kopfende ist ein Befestigungsteil 30, d.h. ein wischblattseitiges Befestigungsteil 30, zur Verfügung gestellt. Entlang der Längserstreckung des Wischblatts 2 wird der Abstand zwischen dem Oberteil 10 und dem Unterteil 12 ausgehend vom Kopfende kleiner, zumindest in Bereichen der Längserstreckung des Wischblatts bzw. in einem überwiegenden Teil der Längserstreckung des Wischblatts. Ausgehend vom Kopfende läuft die Höhe des Wischblatts in Bereichen keilförmig zu bzw. wird in Bereichen der Längserstreckung kleiner. Zum Beispiel kann gemäß Ausführungsformen für eine Mehrzahl der Verbindungselemente die Länge der Verbindungselemente derart zur Verfügung gestellt werden, dass die am Kopfende zur Verfügung gestellten Verbindungselemente länger sind als die an der gegenüberliegenden Seite des Wischblatts entlang der Längserstreckung.

Durch diese Eigenschaften kann eine Scheibenwischvorrichtung zur Verfügung gestellt werden, die nach dem Finray-Prinzip funktioniert. Diese Scheibenwischvorrichtungen haben typischerweise kein Gelenk um das Wischblatt oder eine Wischlippe von einer Scheibe, zum Beispiel einer Scheibe eines Kraftfahrzeugs, abzuheben. Zum Beispiel wird das Wischblatts 2 mittels eines Schnellverschlusses (Quickfix) von einem an einer Antriebswelle 130 zur Verfügung gestellten Befestigungselement 50 gelöst.

Figur 1 zeigt ein wischblattseitiges Befestigungsteil 30 und ein Befestigungselement 50. Zum Anbringen des Wischblatts 2 bzw. zum Lösen des Wischblatts findet eine translatorische Bewegung statt, die zum Beispiel im Wesentlichen entlang der Achse der Antriebswelle 130 ausgerichtet sein kann. Gegebenenfalls kann diese Bewegung einen Winkel mit der Antriebswelle von ± 15° oder kleiner einschließen. Eine Torsion bzw. eine Rotation des Befestigungsteils 30 um eine Achse parallel zur Längserstreckung des Wischblatts kann durch Führungselemente im Befestigungsteil 30 oder ein Befestigungselement 50 begrenzt oder ausgeschlossen werden.

Figur 2 zeigt einen Ausschnitt eines Wischblatts 2 einer Scheibenwischvorrichtung nach Ausführungsformen der Erfindung, wobei am Kopfende 70 des Wischblatts 2 ein Befestigungsteil 30 ausgebildet ist, das heißt ein wischblattseitiges Befestigungsteil, das mit einem Befestigungselement 50 lösbar verbindbar ist. Das Befestigungselement 50 ist auf einer Antriebswelle 130 zur Verfügung gestellt. Das Befestigungselement 50 wird zum Beispiel an der Antriebswelle angeklemmt, so dass eine Rotation der Antriebswelle 130 auf das Befestigungselement 50 übertragen wird. Diese Rotation wird wiederum auf das Befestigungsteil 30 übertragen, so dass das Wischblatts 2 auf einer Scheibe eines Fahrzeugs, zum Beispiel eines Kraftfahrzeugs, rotiert.

Das Wischblatt 2 beinhaltet ein Oberteil 12 ein Unterteil 10 und mehrere Verbindungselemente 18. Das Befestigungsteil 30 beinhaltet eine Kavität und eine Öffnung 210. Die Kavität ist eingerichtet, um das Befestigungselement 50 aufzunehmen. Die Öffnung 210 ist angepasst, so dass ein Kupplungselement 21 einer Kupplungsvorrichtung in die Öffnung eingeführt werden kann. Die Öffnung 210 kann auch als Führungselement einer Kupplungsvorrichtung bezeichnet werden. In einer Ausführungsform bietet die Öffnung 210 ein Auflager 230, wobei der untere Bereich der Bereich der Öffnung 210 ist, der einer Scheibe zugewandt ist.

Die in der in Figur 2 beispielhaft dargestellte Ausführungsform einer erfindungsgemäßen Scheibenwischvorrichtung umfasst eine Kupplungsvorrichtung, die das Befestigungselement und das Befestigungsteil des Wischarms bis zu einem vordefinierten Drehmoment rotationssteif miteinander verbinden kann, so dass bei einer Betätigung des Scheibenwischers im Fahrzeug die Rotation der Antriebswelle 130 auf den Wischarm übertragen werden kann. Andererseits erlaubt die Kupplungsvorrichtung nach Ausführungsformen der Erfindung eine (funktionale oder konstruktive) Trennung des Befestigungselements und des Befestigungsteils bei Überschreiten des definierten Drehmoments. In einem Beispiel der erfindungsgemäßen Ausführungsform, das auch in den Zeichnungen gezeigt ist, wird die Verbindung des Befestigungselements und des Befestigungsteils so gelöst, dass der Wischarm von dem Befestigungselement freigegeben wird. In einem anderen Beispiel wird eine Kupplungsvorrichtung in der Scheibenwischvorrichtung zur Verfügung gestellt, die bei Überschreiten des definierten Drehmoments die die Rotation der Antriebswelle übertragende Verbindung unterbricht, während das Befestigungselement und das Befestigungsteil aneinander befestigt bleiben. Eine solche Kupplungsvorrichtung kann zum Beispiel eine Rutschkupplung umfassen.

Dabei wird durch die Verwendung einer erfindungsgemäßen Scheibenwischvorrichtung gemäß hierin beschriebener Ausführungsformen die Beschädigung eines Schiebenwischarms, z.B. durch Schneelasten, Vandalismus, oder dergleichen verhindert.

Gemäß Ausführungsformen der vorliegenden Erfindung wird eine Rotationsposition um eine Achse senkrecht zur Längserstreckung des Wischblatts und senkrecht zur Achse der Antriebswelle (oder senkrecht zur linearen Montagerichtung) durch einen ersten Kontaktpunkt und einen zweiten Kontaktpunkt zwischen dem wischblattseitigen Befestigungsteil 30 und im Befestigungselement 50 festgelegt. Die Lage des Wischblatts 2 wird somit definiert ohne überbestimmt zu sein.

In einer Ausführungsformen der vorliegenden Erfindung wird der erste Kontaktpunkt durch ein Führungselement der Kupplungsvorrichtung zur Verfügung gestellt, das zwischen der Rotationsachse der Antriebswelle 130 und einem Verbindungselement 18 zur Verfügung gestellt ist, und der zweite Kontaktpunkt durch einen Anschlag, der zum Beispiel auf der gegenüberliegenden Seite der Antriebswelle 130 zur Verfügung gestellt ist.

Gemäß Ausführungsformen der vorliegenden Erfindung kann der Anschlag 232, der am Befestigungselement 50 zur Verfügung gestellt ist, um mit einer entsprechenden Position des Befestigungsteils 30 die Rotationsposition zu definieren, an einem beweglichen Element 254 zur Verfügung gestellt werden. Das bewegliche Element 254 kann zum Beispiel ein in einer Führung beweglicher Pin sein. Die Bewegung des beweglichen Elements 254 kann durch eine Feder 252 definiert werden, die eine Kraft für den Anschlag 232 aufbringt. Verstärkt sich zum Beispiel eine Kraft, die beim Wischen des Wischblatts 2 auf das Unterteil 10 wirkt, wird über den Hebel der Anschlag 232 nach unten bewegt, das heißt die Feder 252 wird mit einer stärkeren Kraft belastet. Das bewegliche Element 254 bewegt sich nach unten. Der Anschlag 232 hat hierbei eine variable Position, wobei ein Hebel um das Auflager 230 existiert.

Gemäß manchen Ausführungsformen, die mit anderen Ausführungsformen kombiniert werden können, kann eine auf die Unterseite des Wischblatts bzw. eine an der Unterseite befestigten Wischlippe wirkenden Kraft von 2 Newton bis 10 Newton, zum Beispiel ungefähr 5 Newton, über einen Hebelverhältnis einer Federkraft von 8 Newton bis 40 Newton, ungefähr 20 Newton entsprechen.

Gemäß noch weiteren Ausführungsformen, die mit anderen Ausführungsformen kombiniert werden können, kann ein Befestigungselement 50 auch ohne Feder ausgestaltet werden. Hierbei wird durch den Anschlag 232 eine feste Rotationsposition zur Verfügung gestellt. Es wird aus dem beweglichen Element 254 ein festes Element. Gemäß noch weiteren Ausführungsformen, kann die Position des Anschlags durch unterschiedliche Längen dieses festen Elements bzw. durch unterschiedliche Adapter bzw. Aufsätze auf das feste Element zur Verfügung gestellt werden. Es kann durch diese vordefinierte Variation des Anschlags bzw. des Kontaktpunkts zum Beispiel die Verwendung einer Scheibenwischvorrichtung auf einem spezifischen Fahrzeugtyp eingestellt werden.

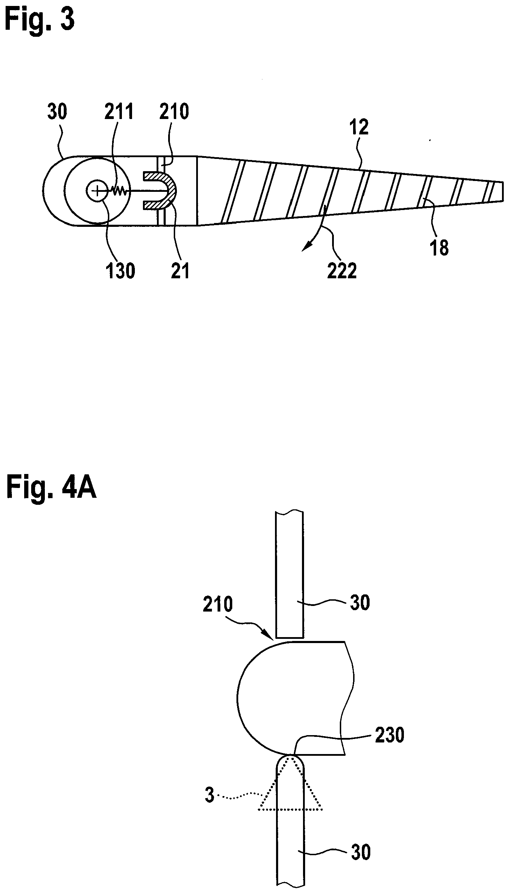

Wie oben beschrieben wird durch das Führungselement, das während des Normalbetriebes zum Beispiel ein Auflager bereitstellen kann, und einen Anschlag, das heißt einen ersten Kontaktpunkt und einen zweiten Kontaktpunkt, eine Rotationsposition um eine Achse senkrecht zur Längserstreckung des Wischblatts und senkrecht zur Achse der Antriebswelle in Abhängigkeit einer Kraft auf das Wischblatt zur Verfügung gestellt. In Abhängigkeit der Kraft kann das Wischblatt im Normalbetrieb um eine Achse senkrecht zur Längserstreckung des Wischblatts und senkrecht zur Achse der Antriebswelle rotieren. Gemäß einer Ausführungsform der Erfindung stellt das Kupplungselement 21, wie in Fig. 2 dargestellt, einen Radius in einem Radiusabschnitt zur Verfügung, während es in einem restlichen Teil im Wesentlichen gerade verläuft. Dabei kann das Führungselement 210 während des Normalbetriebes, d.h. wenn das definierte Drehmoment noch nicht erreicht ist, teilweise den Radiusabschnitt umgeben und in dem restlichen Teil, der im Wesentlichen gerade verläuft, einen Kontaktpunkt finden. Typischerweise befindet sich der Radiusabschnitt des Kupplungselementes im montierten Zustand an einem den Verbindungselementen 18 zugewandten Ende des Wischarms. In einer Ausführungsform ist der Radius so angeordnet, dass sich die Krümmung des Radius in Richtung um die Antriebsachse erstreckt. Zudem kann der Radius, wie zum Beispiel in der Figur 3 gezeigt, in die Richtung der Verbindungselemente des Wischarms im montierten Zustand zeigen. Im Rahmen dieser Beschreibung soll unter dem Begriff "Normalbetrieb" ein Lastfall für den Wischarm verstanden werden, bei dem der definierte Drehmomentwert nicht überschritten wird.

Figur 3 zeigt eine Ausführungsform der erfindungsgemäßen Scheibenwischvorrichtung mit einer Kupplungsvorrichtung. Fig. 3 zeigt eine Schnittansicht entlang einer Schnittebene, die im Wesentlichen parallel zur Wischblattoberseite verläuft. Die Scheibenwischvorrichtung umfasst ein Kupplungselement 210 mit einem Radius an einem Radiusabschnitt und ein Führungselement 210. In dem gezeigten Beispiel ist das Kupplungselement 21 mit einem Krafterzeugungselement, insbesondere mit einer Feder 211 befestigt. Das Führungselement 210 kann das Kupplungselement 21 während des Normalbetriebes in einer definierten Position halten, insbesondere in einer definierten Rotationsposition. Wenn, gemäß Pfeil 222 in Fig. 3, ein Drehmoment auf den Wischarm der Scheibenwischvorrichtung wirkt, und dieses Drehmoment den definierten Drehmomentwert überschreitet, kann das Kupplungselement 21, insbesondere durch die Ausgestaltung des Radius und die entsprechende Belastung durch das Führungselement, durch das Führungselement rutschen. Dadurch kann das Führungselement keine Auflagerfunktion mehr zur Verfügung stellen und die Verbindung zwischen dem Befestigungselement und dem Befestigungsteil des Wischarms wird gelöst. Die Feder 211 kann dabei die Einstellung des definierten Drehmomentwertes mitbestimmen und bei dem auftretenden Drehmoment entlang Pfeil 222 eine Auslenkung des Kupplungselements 21 erlauben.

Gemäß einer Ausführungsform kann der definierte Drehmomentwert in einem Bereich von ungefähr 4 Nm bis ungefähr 50 Nm liegen, insbesondere in einem Bereich von ungefähr 10 Nm bis ungefähr 25 Nm.

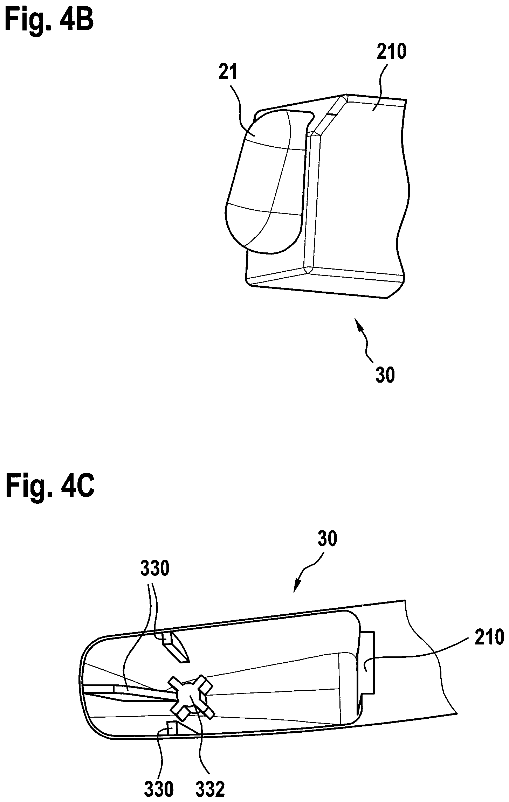

Die Figuren 4A und 4B zeigen weitere Details des Führungselements 210, das ein Auflager 230 für das Kupplungselement 21 bei Normalbetrieb bilden kann. Das Auflager ist exemplarisch durch ein Dreieck 3 dargestellt. Hierzu ist in einem Ausschnitt ein Teil des Befestigungsteils 30 gezeigt. Ferner stellt in der beispielhaft gezeigten Ausführungsform das Kupplungselement 21 einen Teil des Befestigungselements 50 dar, das mit dem Befestigungsteil 30 einen Eingriff bildet. Das Befestigungsteil 30 hat ein als Öffnung 210 ausgebildetes Führungselement. Das Kupplungselement 21 kann in die Öffnung 210 eingeführt werden um einen Kraft-und oder Formschluss während des Normalbetriebes zu bilden. In Fig. 4A kann man sehen, dass das Kupplungselement 21 einen Radius aufweist und dass das Führungselement 210 das Kupplungselement nur teilweise an dem Radiusabschnitt des Kupplungselements umgibt, während das Auflager zumindest teilweise in einem im Wesentlichen geraden Abschnitt des Kupplungselements angreift. Bei einem Drehmoment auf den Wischarm wirkt eine Kraft von dem Führungselement 210 auf das Kupplungselement der Kupplungsvorrichtung. Wenn das Drehmoment den definierten Drehmomentwert überschreitet, wird ein Durchrutschen des Kupplungselements durch das Führungselement hindurch ermöglicht, insbesondere durch das Krafterzeugungselement 211 am Kupplungselement 21 und die entsprechende Positionierung des Führungselements, weiterhin insbesondere durch die Ausgestaltung des Radius des Kupplungselements. In einem Beispiel kann die Wandstärke des Befestigungsteils 30 0,5 bis 3 mm, insbesondere 1 bis 2 mm betragen.

Figur 4C illustriert weitere Merkmale, Details und Aspekte des Befestigungsteils 30 gemäß Ausführungsform der Erfindung, die optional zur Verfügung gestellt werden können. Das Befestigungsteil 30 beinhaltet, wie oben beschrieben, eine Öffnung 210, die im in Figur 4C vorliegenden Querschnitt, teilweise dargestellt ist. Darüber hinaus beinhaltet das Befestigungsteil 30 eine Kavität. In der Kavität können ein oder mehrere Führungsmittel 330 für das Befestigungselement zur Verfügung gestellt werden, um während des Normalbetriebes eine sichere Befestigung zu gewährleisten.

Gemäß manchen Ausführungsformen kann das Befestigungsteil 30 bzw. das Wischblatt 20 dadurch zur Verfügung gestellt werden, das mechanische Elemente wie Federn, Federelemente, Betätigungsvorrichtung und/oder metallische Elemente nicht in dem Befestigungsteil 30 sondern in einem korrespondierenden Befestigungselement 50 zur Verfügung gestellt werden. Das Befestigungsteil 30 ist somit angepasst, um in einem Spritzgussverfahren, insbesondere einem einfachen Spritzgussverfahren bzw. einem Spritzgussverfahren mit einem Schritt zur Verfügung gestellt zu werden. Zum Beispiel besteht das Befestigungselement 30 lediglich aus einem Material. Das Befestigungselement 30 hat eine Öffnung 210 und eine Kavität. Optional können in dem einen Material Ausformungen wie Führungsschienen oder eine Kontaktposition zur Verfügung gestellt werden.

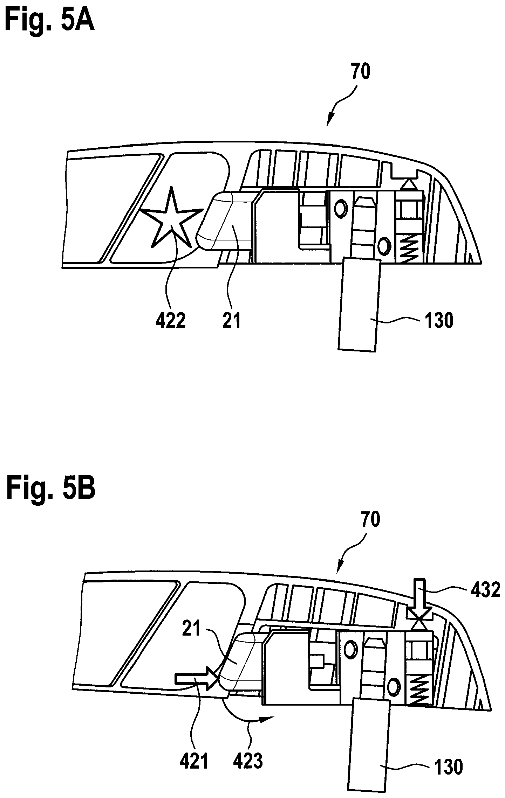

Die Figuren 5A bis 5D zeigen die Lösung und Freigabe eines Wischblatts 2 mithilfe der Kupplungsvorrichtung gemäß Ausführungsformen der Erfindung. In dem gezeigten Beispiel hat das Wischblatt 2 am Kopfende 70 ein Befestigungsteil 30. Das Befestigungsteil beinhaltet eine Kavität und eine Öffnung 210. Auf der Antriebswelle 130 ist ein Befestigungselement 50 zur Verfügung gestellt. Das Befestigungselement 50 beinhaltet zum Beispiel das Kupplungselement 21.

Während des Normalbetriebes (wie in Figur 4A gezeigt) befindet sich das Kupplungselement 21 in dem Führungselement 210 des Befestigungselements 50, wie in Figur 5A gezeigt. Die rotationssteife Verbindung von Befestigungselement 50 und Befestigungsteil 30 durch das Kupplungselement und das Führungselement ist in Figur 5A durch den Stern 422 schematisch illustriert. Der Anschlag zwischen dem Beginn des Befestigungselements 50 und der Kontaktposition im Befestigungsteil 30 bildet einen zweiten Kontaktpunkt.

Figur 5B zeigt eine Rotation des Führungselements 210 in Richtung 423, die durch ein Drehmoment an dem Wischarm hervorgerufen werden kann. Übersteigt das Drehmoment den definierten Drehmomentwert, übt das Führungselement eine solche Kraft auf das Kupplungselement aus, dass die Rotation eine Kompression eines Krafterzeugungselements bewirkt, insbesondere einer Feder an dem Kupplungselement 21, wie sie zum Beispiel Figur 3 gezeigt ist. Die Kompression des Krafterzeugungselements wird in Richtung des Pfeils 421 in Figur 4B dargestellt. Durch die durch die Kompression in Richtung 421 bewirkte Bewegung des Kupplungselements 21 in Richtung 421 rutscht das Kupplungselement 21 aus dem Führungselement 210 heraus. Dabei kann die entstehende Instabilität der Position des Befestigungsteils 30 in Bezug auf das Befestigungselement 50 auch zu einer Lösung des Kontaktes am Anschlag führen, insbesondere zu einer Lösung des Befestigungsteils 30 von dem Anschlag, wie durch Pfeil 432 angedeutet.

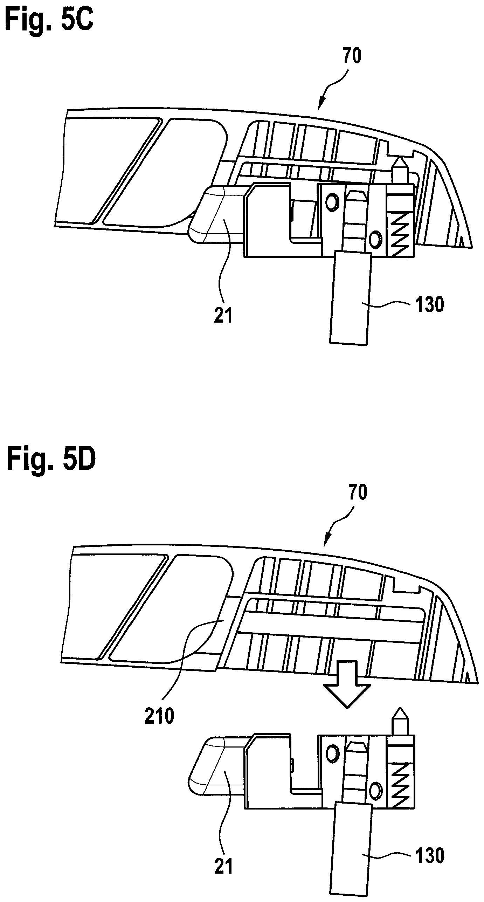

Figur 5C zeigt die fortschreitende Loslösung des Wischarms mit Befestigungsteil 30 von dem Befestigungselement 50, wobei auch die funktionale Verbindung zwischen Antriebswelle und Wischarm gelöst wird. Figur 5D zeigt den Wischarm mit Befestigungsteil 30 und das Befestigungselement komplett voneinander gelöst.

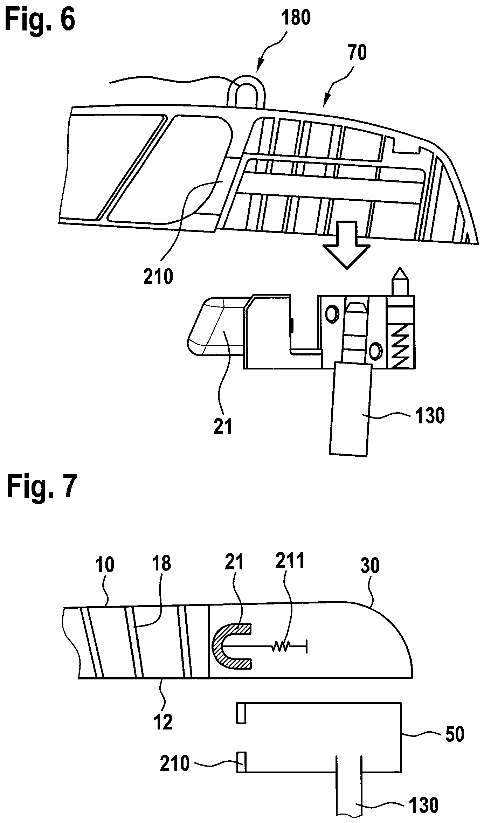

Figur 6 zeigt eine Ausführungsform einer Scheibenwischvorrichtung in einer Form, in der der Wischarm mit dem Befestigungsteil 30 am Kopfende 70 von dem Befestigungselement 50 durch Überschreiten des definierten Drehmomentwertes losgelöst ist. In dem gezeigten Beispiel umfasst der Wischarm, insbesondere am Kopfende, ein Rückholelement 180, das den Wischarm zum Beispiel am Fahrzeug hält, um den (unkontrollierten) Verlust des Wischarms zu verhindern.

Figur 7 zeigt eine weitere Ausführungsform der erfindungsgemäßen Scheibenwischvorrichtung. In der in Figur 7 gezeigten Ausführungsform befindet sich das Kupplungselement 21 in dem Wischarm, insbesondere in dem Befestigungsteil 30 des Wischarms, um eine Sicherheitskupplung einer Scheibenwischvorrichtung zur Verfügung zu stellen. Gemäß Ausführungsformen der Erfindung kann das Befestigungselement 50 das Führungselement 210 der Kupplungsvorrichtung umfassen.

Im Folgenden werden Aspekte einer beispielhaften Scheibenwischvorrichtung beschrieben, für welche die hierin beschriebenen Ausführungsformen der Scheibenwischvorrichtung, insbesondere mit der beschriebenen Sicherheitskupplung als Kupplungsvorrichtung vorteilhaft sind. Der Wischarm bzw. das Wischblatt können dabei besonders zuverlässig vor Beschädigung geschützt werden, wenn ein ungewöhnlich hohes (d.h. außerhalb des Normalbetriebs liegendes) Drehmoment auf den Wischarm wirkt. Zudem kann der Wischarm einfach zur Verfügung gestellt werden, wobei zum Beispiel der Wischer bzw. die Scheibenwischvorrichtung, die an einem Fahrzeug montiert wird, ausschließlich aus Kunststoff besteht. Zum Beispiel kann die Scheibenwischvorrichtung ohne Metallteile und/oder ohne mechanische Elemente zur Verfügung gestellt werden.

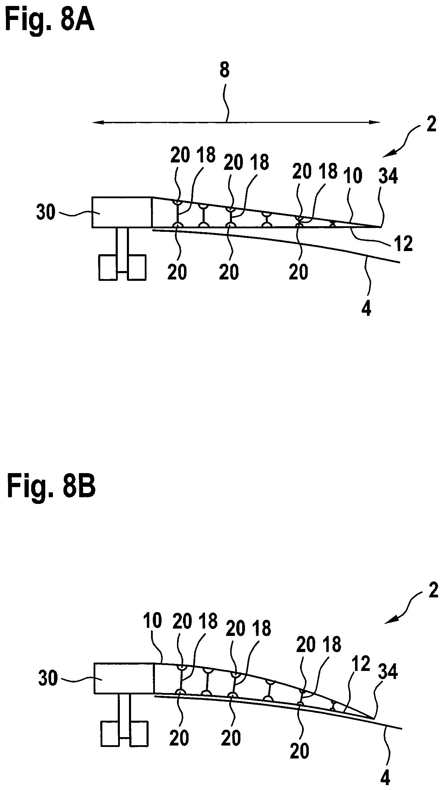

Figuren 8A und 8B zeigen schematische Darstellungen eines Wischblatts 2 in einer Grundstellung und in einer an eine Scheibe angelegten Stellung gemäß Ausführungsformen der Scheibenwischvorrichtung der Offenbarung. Das Wischblatt 2 dient zum Wischen einer Scheibe 4 eines Fahrzeugs, das zum Beispiel ein Kraftfahrzeug ist, insbesondere ein Auto. Das Wischblatt 2 hat eine Längserstreckung 8 und weist ein langgestrecktes Oberteil 10 und ein ebenfalls langgestrecktes Unterteil 12 auf. Die Längserstreckungen des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein Es ist ebenso möglich, nur jeweils einen Teil des Oberteils 10 und/oder des Unterteils 12 biegbar auszugestalten. Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm² und 0,5 kN/mm², insbesondere 0,01 kN/mm² und 0,1 kN/mm², liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit.

Das Oberteil 10 und das Unterteil 12 sind an einem Befestigungsteil 30 befestigt. Die Scheibenwischvorrichtung kann mittels des Befestigungsteils 30 zum Beispiel mit einer Quickfix-Befestigung am Fahrzeug verbunden sein. An der Seite, die dem Befestigungsteil 30 entlang der Längserstreckung der Scheibenwischvorrichtung gegenüberliegt, ist das Oberteil 10 und das Unterteil 12 an einer Verbindungsposition 34 verbunden. Die Verbindungselemente sind derart ausgestaltet, dass sich der Abstand der Verbindungsposition mit dem Oberteil und der Abstand der Verbindungsposition mit dem Unterteil um maximal ±1 mm ändert, insbesondere um maximal +. 0,3 mm ändert (zum Beispiel durch Wärmeausdehnung und/oder Zug und Druckbelastung). Die Verbindungselemente können somit im Wesentlichen nicht elastisch ausgebildet bzw. der Effekt der Verbindungselemente beruht auf deren Kraftübertragung zwischen Oberteil und Unterteil und nicht auf deren Elastizität.

Das Oberteil 10 und das Unterteil 12 sind durch Verbindungselemente 18 miteinander verbunden. Die Verbindungselemente 18 sind an einander zugewandten inneren Längsseiten des Oberteils 10 und des Unterteils 12 mittels Drehgelenken 20 befestigt. Typischerweise sind die Drehgelenke 20 Scharniere. Insbesondere können die Drehgelenke 20 als Filmscharniere ausgebildet sein. Dies ist vor allem dann vorteilhaft, wenn das Oberteil 10, das Unterteil 12 und/oder die Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils mit dem Verbindungselement oder zur Verbindung des Unterteils mit dem Verbindungselement, das die Verschiebung des Unterteils in Bezug auf das Oberteil entlang der Längserstreckung erlaubt, etc.

Ausführungsformen, bei denen die Gelenke durch Filmscharniere zur Verfügung gestellt sind, stellen somit eine sehr einfache Art und Weise zur Verfügung, um die Gelenke für einen Fin-Ray-Wischer zur Verfügung zu stellen. Das Wischblatt 2 kann einteilige, insbesondere werkzeugfallend, zur Verfügung gestellt werden. Gemäß typischen Ausführungsformen haben die Filmscharniere eine hohe Dehnbarkeit. Dies kann zum Beispiel durch ein Material ausgewählt aus der Gruppe PP, PE, POM, und PA, zur Verfügung gestellt werden. Alternativ können die Filmscharniere aus einem oder mehreren Materialen aus einer Gruppe bestehend aus: TPE (Thermoplastischem Elastomer), beispielsweise TPE-S, TPE-O, TPE-U, TPE-A TPE-V und TPE-E hergestellt sein.

Die Verbindungselemente 18 sind entlang der Längserstreckung des Wischblatts 2 voneinander beabstandet. Die Abstände sind vorteilhafterweise kleiner als 50 mm, insbesondere kleiner als 30 mm. Dadurch kann eine besonders hohe Flexibilität der Scheibenwischvorrichtung, insbesondere ihres Unterteils, und gute Anpassung an die Krümmung und Krümmungsänderungen der zu wischenden Scheibe gewährleistet werden.

Fig. 8B zeigt eine schematische Darstellung des Wischblatts 2 nach Fig. 8A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen, findet bei einer Krafteinwirkung auf das Unterteil (durch die Scheibe 4) eine Biegung des Unterteils in die Richtung statt, aus der die Kraft wirkt. Dies ist durch die Verbindung des Oberteils 10 und des Unterteils an der Verbindungsposition 34, die Form, und durch Drehgelenke an der Verbindung zwischen den Verbindungselementen und dem Ober- bzw. Unterteil gegeben. Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet. Dadurch hat eine Scheibenwischvorrichtung gemäß den hierin beschriebenen Ausführungsformen den Vorteil einer verbesserten Anpassung an eine Scheibe eines Kraftfahrzeugs. Bei einem herkömmlichen Scheibenwischblatt ist dessen Oberteil üblicherweise starr, d. h. es ist nicht biegbar ausgebildet.

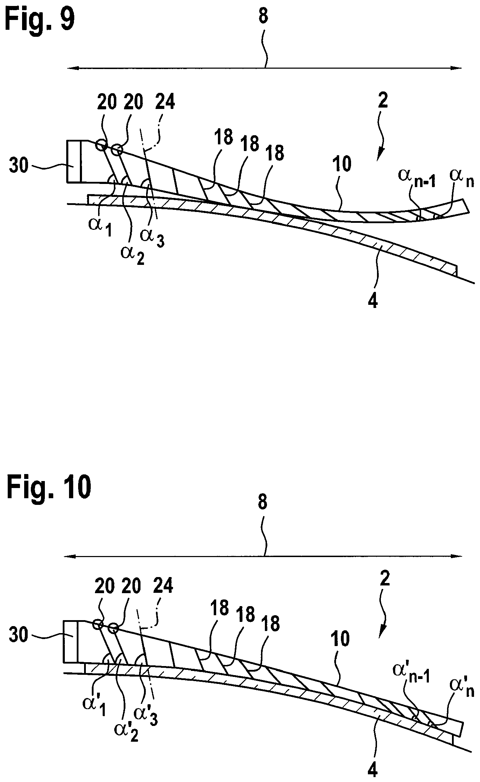

Figuren 9 und 10 zeigen schematische Darstellungen eines Wischblatts 2 einer Scheibenwischvorrichtung für ein Fahrzeug, insbesondere für ein Kraftfahrzeug, in einer Grundstellung (Figur 9), d.h. in einem unbelastetem Zustand, und in einer an eine Scheibe 4 angelegten Stellung (Figur 10) gemäß den hierein beschrieben Ausführungsformen. Das Wischblatt 2 umfasst ein langgestrecktes Oberteil 10 und ein langgestrecktes Unterteil 12, welche zumindest teilweise biegbar ausgestaltet sind. Des Weiteren sind mehrere Verbindungselemente 18 zum Verbinden des Oberteils 10 und des Unterteils 12 vorgesehen, wobei die Verbindungselemente 18 entlang einer Längserstreckung 8 des Wischblatts 2 voneinander beabstandet sind. Die Verbindungselemente 18 sind ausgelegt, um eine Bewegung des Oberteils 10 und des Unterteils 12 relativ zu einander mit einer Bewegungskomponente entlang einer Längserstreckung 8 des Wischblatts 2 zu ermöglichen. Des Weiteren sind die Verbindungselemente 18 relativ zum Unterteil 12 so angeordnet, dass sich in einem unbelasteten Zustand des Wischblatts 2 ein Winkel αₙ der jeweiligen Längsachsen 24 der Verbindungselemente 18 relativ zum Unterteil 12 zumindest teilweise entlang einer Längserstreckung 8 des Wischblatts 2 verändert, insbesondere stetig verändert bzw. monoton oder streng monoton verändert.

In dem in Figur 9 dargestellten Wischblatt im unbelastetem Zustand sind die Winkel αₙ der jeweiligen Längsachsen der Verbindungselemente 18 relativ zum Unterteil 12, die sich entlang der Längserstreckung 8 des Wischblatts 2 ändern, mit α₁, α₂, α₃, ... αₙ₋₁, αₙ bezeichnet. In einem belasteten Zustand des Wischblatts, d.h. in einer an die Scheibe angelegten Stellung, wie sie beispielhaft in Fig. 10 dargestellt ist, verändern sich die Winkel αₙ der jeweiligen Längsachsen 24 der Verbindungselemente 18 relativ zum Unterteil 12 im Vergleich zum unbelasteten Zustand. Um dies zum Ausdruck zu bringen sind die Winkel αₙ der jeweiligen Längsachsen der Verbindungselemente 18 relativ zum Unterteil 12, die sich entlang der Längserstreckung 8 des Wischblatts 2 ändern, in dem in Fig. 2 dargestellten Wischblatt, welches sich in einer an die Scheibe angelegten Position befindet, mit α'₁, α'₂, α'₃, ... α'ₙ₋₁, α'ₙ bezeichnet.

Gemäß Ausführungsformen der Scheibenwischvorrichtung, welche mit anderen Ausführungsformen kombiniert werden können, weist das Wischblatt 2 zumindest einen ersten Bereich auf, in dem der Winkel αₙ der Längsachsen 24 der Verbindungselemente 18 relativ zum Unterteil 12 entlang einer Längserstreckung 8 des Wischblatts 2 zu einem Wischblattende hin abnimmt, insbesondere monoton, insbesondere streng monoton, abnimmt. Ferner kann das Wischblatt 2 zumindest einen zweiten Bereich aufweisen, in dem der Winkel αₙ der Längsachsen 24 der Verbindungselemente 18 relativ zum Unterteil 12 entlang einer Längserstreckung 8 des Wischblatts 2 zu einem Wischblattende hin zunimmt, insbesondere monoton, insbesondere streng monoton, zunimmt. Gemäß Ausführungsformen, wie beispielhaft in den Figuren 9 und 10 dargestellt, ist der zweite Bereich des Wischblatts, in dem der Winkel αₙ der Längsachsen 24 der Verbindungselemente 18 relativ zum Unterteil 12 entlang der Längserstreckung 8 des Wischblatts 2 zu einem Wischblattende hin zunimmt, an einer inneren Position des Wischblatts angeordnet, welche sich in der Nähe einer Befestigungsvorrichtung 30 des Wischblatts befindet. Dadurch kann eine Scheibenwischvorrichtung zur Verfügung gestellt werden, welche eine besonders gute Anpassung an die Krümmung einer Scheibe ermöglicht. Ferner kann ein weitgehend gleichmäßiger Anpressdruck der Scheibenwischvorrichtung auf der Scheibe als auch eine homogene Kraftverteilung der Scheibenwischvorrichtung bereitgestellt werden, so dass eine hohe Wischqualität bereitgestellt wird.

Gemäß Ausführungsformen des Wischblatts, welche mit anderen Ausführungsformen kombiniert werden können, sind die Verbindungselemente 18, insbesondere in einem unbelastetem Zustand des Wischblatts 2, so an dem Unterteil 12 befestigt, dass die Längsachsen 24 der Verbindungselemente 18 in Winkeln αₙ zum Unterteil 12 verlaufen, die zwischen einem unteren Winkelgrenzwert αₙᵤ und einem oberen Grenzwert αₙₒ liegen. Gemäß Ausführungsformen, ist der untere Winkelgrenzwert αₙᵤ = 10°, insbesondere αₙᵤ = 15°, insbesondere αₙᵤ = 20° und der obere Winkelgrenzwert αₙₒ = 80°, insbesondere αₙₒ = 90° insbesondere αₙₒ = 100°. Dies gewährleistet vorteilhafterweise eine besonders gute Übertragung einer auf das Unterteil wirkenden Kraft auf das Oberteil.

Gemäß Ausführungsformen der Scheibenwischvorrichtung, welche mit anderen Ausführungsformen kombiniert werden können, sind die Verbindungselemente 18 derart konfiguriert sind, dass sich der Abstand zwischen dem Oberteil 10 und dem Unterteil 12 zumindest teilweise entlang einer Längserstreckung 8 des Wischblatts 2 verändert, insbesondere in einem ersten Bereich stetig verkleinert und in einem zweiten Bereich stetig vergrößert. Der Abstand zwischen dem Oberteil 10 und dem Unterteil 12 entlang der Längserstreckung 8 des Wischblatts 2 kann auch einen Bereich umfassen, in welchem der Abstand zwischen dem Oberteil 10 und dem Unterteil 12 entlang der Längserstreckung 8 des Wischblatts 2 im Wesentlichen konstant ist. Der Abstand zwischen dem Oberteil 10 und dem Unterteil 12 ist am Befestigungsteil größer als am gegenüberliegenden Ende.

Gemäß Ausführungsformen des Wischblatts, welche mit anderen Ausführungsformen kombiniert werden können, beträgt der innere (dem Befestigungsteil zugewandte) Abstandswert mindestens 15 mm, insbesondere mindestens 25 mm, insbesondere mindestens 35 mm. Gemäß Ausführungsformen, welche mit anderen Ausführungsformen kombiniert werden können, beträgt der äußere Abstandswert mindestens 10 mm, insbesondere mindestens 12,5 mm, insbesondere mindestens 15 mm. Gemäß Ausführungsformen, welche mit anderen Ausführungsformen kombiniert werden können, beträgt der mittlere Abstandswert mindestens 7,5 mm, insbesondere mindestens 9 mm, insbesondere mindestens 12,5 mm.

Wie in den Figuren 9 bis 10 beispielhaft dargestellt, sind die Verbindungselemente 18 gemäß Ausführungsformen, welche mit anderen Ausführungsformen kombiniert werden können, gelenkig mit dem Unterteil 12 und/oder dem Oberteil 10 verbunden. Insbesondere sind die Verbindungselemente 18 mit dem Unterteil 12 und/oder dem Oberteil 10 mittels eines ersten Filmscharniers 20 verbunden. Das erste Filmscharnier 20 kann einteilig mit dem Verbindungselement 18 und dem Oberteil 10 und/oder dem Unterteil 12 ausgebildet sein. Die einteilige Ausgestaltung der Filmscharniere erlaubt eine einfache und kostengünstige Herstellung.

Gemäß Ausführungsformen des Wischblatts, welche mit anderen hierin beschriebenen Ausführungsformen kombiniert werden können, umfasst das Wischblatt einen ersten Bereich mit einer ersten Krümmung ω<0 und einen zweiten Bereich mit einer zweiten Krümmung ω>0. Ferner kann das Wischblatt gemäß Ausführungsformen einen dritten Bereich mit einer dritten Krümmung ω<0 aufweisen, wobei der zweite Bereich des Wischblatts mit der zweiten Krümmung ω>0 zwischen dem ersten Bereich mit der ersten Krümmung ω<0 und dem dritten Bereich mit der dritten Krümmung ω<0 angeordnet ist, wie es beispielhaft in Fig. 9 gezeigt ist. Somit kann eine Scheibenwischvorrichtung zur Verfügung gestellt werden mit welcher ein weitgehend gleichmäßiger Anpressdruck auf die Scheibe 4 realisiert werden kann. Ferner kann eine Scheibenwischvorrichtung bereitgestellt werden, welche eine verbesserte Anpassung an die Scheibe 4 und eine hohe Wischqualität aufweist.

Gemäß weitern Ausführungsformen kann zusätzlich zu einem für Fin-Ray-Wischer verwendbaren Quickfix-Befestigungsverschluss, bei dem die gesamte Scheibenwischvorrichtung von einer Antriebsachse bzw. einem Befestigungselement an der Antriebsachse am Fahrzeug entfernt wird, einen Mechanismus zur Verfügung gestellt werden, um das Wischblatt 2 einer Scheibenwischvorrichtung von der Scheibe 4 abzuheben bzw. auf diese aufzusetzen. Dies vereinfacht weiter die Benutzung, zum Beispiel für eine manuelle Reinigung der Scheibe 2.

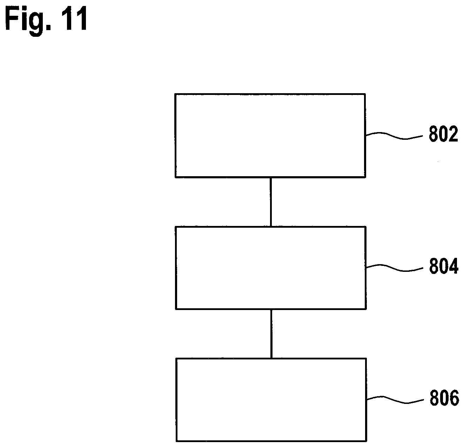

In Figur 11 wird ein Verfahren zum Begrenzen eines Drehmoments, das auf einem Wischarm einer Scheibenwischvorrichtung wirkt, beschrieben. Es wird ein Befestigungselement, das an einer Antriebswelle eines Fahrzeugs befestigbar ist, bereitgestellt (siehe 802). Weiterhin wird ein Wischblatt mit Befestigungsteil, das mit dem Befestigungselement lösbar verbindbar ist, bereitgestellt (siehe 804). Das Verfahren umfasst außerdem das Zusammenfügen des Befestigungsteils des Wischarms mit dem Befestigungselement (siehe 806). Dabei wird das Zusammenfügen mittels einer Kupplungsvorrichtung durchgeführt, wobei durch das Zusammenfügen eine bis zu einem definierten Drehmoment des Wischblatts rotationssteife Verbindung zwischen dem Befestigungselement und dem Befestigungsteil des Wischarms hergestellt wird. Insbesondere kann es sich bei dem Befestigungselement, dem Wischblatt mit Befestigungsteil und der Kupplungsvorrichtung um die oben beschriebenen Ausführungsformen der Komponenten handeln. Bei der Scheibenwischvorrichtung kann es sich insbesondere um eine Scheibenwischvorrichtung handeln, die nach dem Finray-Prinzip funktioniert, wobei ein wischblattseitiges Befestigungsteil durch eine Kavität mit einer Öffnung als Führungselement zur Verfügung gestellt wird. Typischerweise wird das Kupplungselements gegen das Führungselement durch ein Krafterzeugungselement, insbesondere eine Feder, bei Drehmomenten unter dem definierten Drehmomentwert gedrückt.

## Patentansprüche

1. Scheibenwischvorrichtung (100) für ein Fahrzeug mit einem an einer Antriebswelle befestigten Befestigungselement (50), insbesondere ein Kraftfahrzeug, umfassend ein Wischblatt (2) mit
- einem langgestreckten Oberteil (10), das zumindest teilweise biegbar ausgestaltet ist,
- einem langgestreckten Unterteil (12), das zumindest teilweise biegbar ausgestaltet ist,
- mehreren Verbindungselementen (18) zum Verbinden des Oberteils (10) und des Unterteils (12), wobei die Verbindungselemente (18) entlang einer Längserstreckung (8) des Wischblatts (2) voneinander beabstandet sind, und wobei die Verbindungselemente (18) ausgelegt sind, um eine Bewegung des Oberteils (10) und des Unterteils relativ zueinander mit einer Bewegungskomponente entlang einer Längserstreckung (8) des Wischblatts (2) zu ermöglichen,
- einem wischblattseitigen Befestigungsteil (30), wobei das wischblattseitige Befestigungsteil (30) an dem Befestigungselement (50) lösbar verbindbar ist, und
- einer Kupplungsvorrichtung, **dadurch gekennzeichnet dass** das wischblattseitige Befestigungsteil (30) und das Befestigungselement (50) durch die Kupplungsvorrichtung bis zu einem Überschreiten eines definierten Drehmomentwerts rotationssteif verbindbar und komplett lösbar sind, wobei das Befestigungselement (50), und die Kupplungsvorrichtung insbesondere ein Kupplungselement (21) umfasst, das am Befestigungselement (50) angebracht ist und sich bei Erreichen des definierten Drehmomentwertes bewegt.

2. Scheibenwischvorrichtung nach Anspruch 1, wobei bei Überschreiten des definierten Drehmomentwertes das wischblattseitige Befestigungsteil (30) von dem Befestigungselement (50) lösbar ist, wobei insbesondere bei Überschreiten des definierten Drehmomentwertes das wischblattseitige Befestigungsteil von dem Befestigungselement freigegeben wird.

3. Scheibenwischvorrichtung (100) nach einem der Ansprüche 1 bis 2, wobei die Kupplungsvorrichtung bei Drehmomentwerten bis zum definierten Drehmomentwert einen Kraft- und/oder Formschluss zwischen dem Befestigungselement (50) und dem Befestigungsteil (30) herstellt.

4. Scheibenwischvorrichtung nach einem der Ansprüche 1 bis 3, wobei die Kupplungsvorrichtung ein Kupplungselement (21) mit einem Radius und ein an dem Kupplungselement (21) bei Drehmomenten unter dem definierten Drehmoment zumindest teilweise anliegendes Führungselement (210) aufweist, wobei insbesondere das Kupplungselement (21) am Befestigungselement (50) angebracht ist und das Führungselement (210) an dem Befestigungsteil (30) des Wischarms angebracht ist.

5. Scheibenwischvorrichtung nach Anspruch 4, wobei durch das an dem Kupplungselement (21) anliegende Führungselement (210) eine rotationssteife Verbindung zwischen dem Befestigungselement (50) und dem Befestigungsteil (30) hergestellt werden kann.

6. Scheibenwischvorrichtung nach einem der Ansprüche 1 bis 5, wobei die Kupplungsvorrichtung weiterhin ein Krafterzeugungselement (211), insbesondere eine Feder, umfasst, wobei das Krafterzeugungselement (211) insbesondere an dem Kupplungselement (21) angebracht ist.

7. Scheibenwischvorrichtung nach einem der Ansprüche 3 bis 6, wobei das Kupplungselement (21) und das Führungselement (210) ausgelegt sind, dass das Kupplungselement (21) mit Radius bei Erreichen des definierten Drehmoments durch das Führungselement (210) rutscht und dabei insbesondere die rotationssteife Verbindung zwischen Befestigungselement (50) und Befestigungsteil (30) lösen kann.

8. Scheibenwischvorrichtung nach einem der Ansprüche 1 bis 7, wobei das definierte Drehmoment in einem Bereich von ungefähr 4 Nm bis ungefähr 50 Nm liegt, insbesondere in einem Bereich von ungefähr 10 Nm bis ungefähr 25 Nm.

9. Scheibenwischvorrichtung nach einem der Ansprüche 1, wobei die Kupplungsvorrichtung eine Rutschkupplung umfasst und wobei insbesondere bei Überschreiten des definierten Drehmomentwertes die funktionale Verbindung zwischen Antriebswelle (130) und Befestigungsteil (30) des Wischarms gelöst wird.

10. Scheibenwischvorrichtung nach einem der Ansprüche 1 bis 9, wobei das wischblattseitige Befestigungsteil (30) einteilig ausgebildet ist.

11. Scheibenwischvorrichtung nach einem der Ansprüche 1 bis 10, wobei das wischblattseitige Befestigungsteil (30) metall-frei und/oder ohne bewegliche Elemente ausgebildet ist.

12. Scheibenwischvorrichtung (100) nach einem der Ansprüche 1 bis 11, wobei die mehreren Verbindungselemente (18) an mehreren oberen Verbindungspositionen mit dem Oberteil (10) und an mehreren unteren korrespondierenden Verbindungspositionen mit dem Unterteil (12) verbunden sind, und wobei bei der Bewegung des Oberteils (10) und des Unterteils (12) relativ zueinander der Abstand zwischen einer oberen Verbindungspositionen und einer korrespondierenden unteren Verbindungsposition, im Wesentlichen konstant ist, insbesondere konstant ist mit einer Abweichung von ±1 mm.

## Claims

1. Windscreen wiper device (100) for a vehicle with a fastening element (50) fixed on a drive shaft, more particularly for a motor vehicle, comprising a wiper blade (2) with
- an elongated upper part (10), which is configured at least partially flexibly,
- an elongated lower part (12), which is configured at least partially flexibly,
- several connecting elements (18) for connecting the upper part (10) and the lower part (12), wherein the connecting elements (18) are spaced apart from one another along a longitudinal extension (8) of the wiper blade (2), and wherein the connecting elements (18) are designed in order to enable a movement of the upper part (10) and the lower part relative to one another with a component of movement along a longitudinal extension (8) of the wiper blade (2),
- a fastening part (30) on the wiper blade side wherein the fastening part (30) on the wiper blade side is detachably connectable to the fastening element (50), and
- a coupling device, **characterized in that** the fastening part (30) on the wiper blade side and the fastening element (50) are connectable to one another for conjoint rotation until a defined torque value is exceeded, and are completely releasable from one another, by means of the coupling device, wherein the fastening element (50) and the coupling device comprise in particular a coupling element (21) which is attached to the fastening element (50) and is moved when the defined torque value is reached.

2. Windscreen wiper device according to Claim 1, wherein when the defined torque value is exceeded the fastening part (30) on the wiper blade side is releasable from the fastening element (50), wherein more particularly when the defined torque value is exceeded the fastening part on the wiper blade side is released from the fastening element.

3. Windscreen wiper device (100) according to one of Claims 1 to 2, wherein the coupling device in the event of torque values up to a defined torque value produces a force-fitting and/or form-fitting connection between the fastening element (50) and the fastening part (30).

4. Windscreen wiper device according to one of Claims 1 to 3, wherein the coupling device has a coupling element (21) with a radius and a guide element (210) bearing at least partially on the coupling element (21) in the event of torques below the defined torque, wherein in particular the coupling element (21) is attached to the fastening element (50) and the guide element (210) is attached to the fastening part (30) of the wiper arm.

5. Windscreen wiper device according to Claim 4, wherein a connection between the fastening element (50) and the fastening part (30) for conjoint rotation can be produced by the guide element (210) which bears against the coupling element (21).

6. Windscreen wiper device according to one of Claims 1 to 5, wherein the coupling device furthermore comprises a force-producing element (211), more particularly a spring, wherein the force-producing element (211) is in particular attached to the coupling element (21).

7. Windscreen wiper device according to one of Claims 3 to 6, wherein the coupling element (21) and the guide element (210) are designed so that the coupling element (21) with radius slips through the guide element (210) when the defined torque is reached and can then in particular release the rotationally secured connection between the fastening element (50) and fastening part (30) .

8. Windscreen wiper device according to one of Claims 1 to 7, wherein the defined torque lies in a range from approximately 4 Nm to approximately 50 Nm, more particularly in a range from approximately 10 Nm to approximately 25 Nm.

9. Windscreen wiper device according to one of Claims 1, wherein the coupling device comprises a slip coupling and wherein in particular when the defined torque value is exceeded the functional connection between the drive shaft (130) and the fastening part (30) of the wiper arm is released.

10. Windscreen wiper device according to one of Claims 1 to 9, wherein the fastening part (30) on the wiper blade side is formed in one piece.

11. Windscreen wiper device according to one of Claims 1 to 10, wherein the fastening part (30) on the wiper blade side is formed free of metal and/or without movable elements.

12. Windscreen wiper device (100) according to one of Claims 1 to 11, wherein the plurality of connecting elements (18) are connected at several upper connecting positions to the upper part (10) and at several lower corresponding connecting positions to the lower part (12), and wherein in the event of movement of the upper part (10) and the lower part (12) relative to one another the distance between an upper connecting position and a corresponding lower connecting position is substantially constant, more particularly is constant with a deviation of ± 1 mm.

## Revendications

1. Dispositif d'essuie-glace (100) pour un véhicule comportant un élément de fixation (50) fixé à un arbre d'entraînement, notamment un véhicule automobile, le dispositif comportant un balai d'essuie-glace (2) comprenant
- une partie supérieure allongée (10) qui est configurée de manière au moins partiellement flexible,
- une partie inférieure allongée (12) qui est configurée de manière au moins partiellement flexible,
- plusieurs éléments de liaison (18) servant à relier la partie supérieure (10) et la partie inférieure (12), les éléments de liaison (18) étant espacés les uns des autres le long d'une étendue longitudinale (8) du balai d'essuie-glace (2), et les éléments de liaison (18) étant configurés de manière à permettre un mouvement de la partie supérieure (10) et de la partie inférieure l'une par rapport à l'autre avec une composante de mouvement le long d'une étendue longitudinale (8) du balai d'essuie-glace (2),
- une pièce de fixation (30) côté balai d'essuie-glace, la pièce de fixation (30) côté balai d'essuie-glace pouvant être reliée de manière amovible à l'élément de fixation (50), et
- un dispositif d'accouplement, **caractérisé en ce que** la pièce de fixation (30) côté balai d'essuie-glace et l'élément de fixation (50) peuvent être reliés de manière solidaire en rotation au moyen du dispositif d'accouplement jusqu'à ce qu'une valeur définie de couple soit dépassée et peuvent être détachés complètement, l'élément de fixation (50) et le dispositif d'accouplement comportant en particulier un élément d'accouplement (21) qui est monté sur l'élément de fixation (50) et se déplace lorsqu'une valeur définie de couple est atteinte.

2. Dispositif d'essuie-glace selon la revendication 1, dans lequel en cas de dépassement de la valeur définie de couple, la pièce de fixation (30) côté balai d'essuie-glace est détachable de l'élément de fixation (50), et notamment dans lequel en cas de dépassement de la valeur définie de couple, la pièce de fixation côté balai d'essuie-glace est libérée de l'élément de fixation.

3. Dispositif d'essuie-glace (100) selon l'une des revendications 1 et 2, dans lequel le dispositif d'accouplement réalise une liaison à force et/ou par complémentarité de forme entre l'élément de fixation (50) et la pièce de fixation (30) pour des valeurs de couple jusqu'à la valeur définie de couple.

4. Dispositif d'essuie-glace selon l'une des revendications 1 à 3, dans lequel le dispositif d'accouplement comporte un élément d'accouplement (21) présentant un rayon et un élément de guidage (210) s'appliquant au moins partiellement contre l'élément d'accouplement (21) pour des couples inférieurs au couple défini, et notamment dans lequel l'élément d'accouplement (21) est monté sur l'élément de fixation (50) et l'élément de guidage (210) est monté sur la pièce de fixation (30) du bras d'essuie-glace.

5. Dispositif d'essuie-glace selon la revendication 4, dans lequel une liaison solidaire en rotation entre l'élément de fixation (50) et la pièce de fixation (30) peut être réalisée au moyen de l'élément de guidage (210) s'appliquant contre l'élément d'accouplement (21).

6. Dispositif d'essuie-glace selon l'une des revendications 1 à 5, dans lequel le dispositif d'accouplement comporte en outre un élément de génération de force (211), notamment un ressort, dans lequel l'élément de génération de force (211) est notamment monté sur l'élément d'accouplement (21).

7. Dispositif d'essuie-glace selon l'une des revendications 3 à 6, dans lequel l'élément d'accouplement (21) et l'élément de guidage (210) sont conçus de telle sorte que l'élément d'accouplement (21) présentant un rayon glisse à travers l'élément de guidage (210) et libère ainsi notamment la liaison solidaire en rotation entre l'élément de fixation (50) et la pièce de fixation (30) lorsque le couple défini est atteint.

8. Dispositif d'essuie-glace selon l'une des revendications 1 à 7, dans lequel le couple défini se situe dans une plage comprise entre environ 4 Nm et environ 50 Nm, notamment dans une plage comprise entre environ 10 Nm et environ 25 Nm.

9. Dispositif d'essuie-glace selon l'une des revendications 1, dans lequel le dispositif d'accouplement comporte un accouplement à glissement, et notamment dans lequel lorsque la valeur définie de couple est dépassée, la relation fonctionnelle entre l'arbre d'entraînement (130) et la pièce de fixation (30) du bras d'essuie-glace est libérée.

10. Dispositif d'essuie-glace selon l'une des revendications 1 à 9, dans lequel la pièce de fixation (30) côté balai d'essuie-glace est réalisée d'un seul tenant.

11. Dispositif d'essuie-glace selon l'une des revendications 1 à 10, dans lequel la pièce de fixation (30) côté balai d'essuie-glace ne comporte pas de métal et/ou ne comporte pas d'élément mobile.

12. Dispositif d'essuie-glace (100) l'une des revendications 1 à 11, dans lequel les multiples éléments de liaison (18) sont reliés à la partie supérieure (10) à de multiples positions de liaisons supérieures et à la partie inférieure (12) à de multiples positions de liaison inférieures correspondantes, et dans lequel en cas de mouvement de la partie supérieure (10) et de la partie inférieure (12) l'une par rapport à l'autre, la distance entre l'une des positions de liaison supérieures et une position de liaison inférieure correspondante est sensiblement constante, notamment constante à un écart près de ± 1 mm.
